# FASCICULE DE BREVET EUROPEEN

(11) **EP 1 198 372 B1**
(45) Date de publication et mention de la délivrance du brevet: **15.06.2005**
(21) Numéro de dépôt: 00958646.2
(22) Date de dépôt: 28.07.2000
(51) Int. Cl.: B60S 1/04, B60S 1/34

(54) **PARTIE TRANSVERSALE ARRIERE D'UN V HICULE AUTOMOBILE ET MODULE D' QUIPEMENT D'UNE TELLE PARTIE ARRIERE**
LATERALES HECKTEIL EINES KRAFTFAHRZEUGES UND AUSSTATTUNGSMODUL EINES SOLCHEN HECKTEILS
MOTOR VEHICLE REAR TRANSVERSE PART AND EQUIPMENT MODULE FOR SAME

(30) Priorité: 30.07.1999 FR 9909896
(43) Date de publication de la demande: 24.04.2002
(73) Titulaire: VALEO SYSTEMES D'ESSUYAGE, 78321 La Verrière (FR)
(72) Inventeur: EUSTACHE, Jean-Pierre, F-92160 Antony (FR); SIMON, Laurent, F-78180 Montigny le Bretonneux (FR); IZABEL, Vincent, F-91800 Brunoy (FR)
(86) Numéro de dépôt international: PCT/FR2000/002179
(87) Numéro de publication internationale: WO 2001/008945

(56) Documents cités:
- EP-A- 0 652 142
- EP-A- 0 694 452
- WO-A-96/33893
- DE-A- 19 501 210

## Description

La présente invention concerne une partie transversale arrière d'un véhicule automobile munie d'un module d'équipement.

L'invention concerne plus particulièrement un module d'équipement pour une partie transversale arrière d'un véhicule automobile, comportant un système d'essuyage d'une vitre arrière et un feu d'éclairage, ainsi qu'une partie transversale arrière comportant un tel module.

Selon une conception couramment utilisée dans la construction automobile, et notamment de véhicules particuliers, la partie transversale arrière du véhicule est constituée par un élément ouvrant, notamment un hayon, qui est monté articulé par rapport à la caisse du véhicule, plus généralement autour d'un axe transversal horizontal supérieur d'articulation, ou bien autour d'un axe latéral vertical.

De nombreux accessoires peuvent être fixés sur l'ouvrant arrière d'un véhicule automobile, notamment lorsqu'il s'agit d'un hayon arrière de grande dimension.

Ainsi, le hayon peut supporter, en plus de son système de fermeture et de verrouillage, un moteur électrique d'essuie-glace, une plaque d'immatriculation et ses systèmes d'éclairage, mais encore éventuellement le troisième feu "stop" réglementaire, voire même tout ou partie des blocs arrière de feux de signalisation, ainsi que la vitre arrière qui est, le cas échéant, elle-même articulée par rapport au hayon.

Tous les accessoires, qui sont bien entendu produits indépendamment de la pièce de carrosserie que constitue le hayon, doivent donc être montés sur ce hayon lors de l'assemblage du véhicule.

Or, la multiplication des accessoires entraîne un accroissement du temps de montage et entraîne des risques multipliés de défaut de montage.

Par ailleurs, il est nécessaire de prévoir, pour chacun des accessoires électriques, d'une part l'alimentation électrique, d'autre part les moyens de commande de ces accessoires, et enfin des moyens de surveillance qui permettent notamment d'informer de l'état de fonctionnement des accessoires soit le conducteur, par exemple par l'intermédiaire de lampes témoins au tableau de bord, soit une unité centrale de gestion électronique du véhicule.

Afin de simplifier et de fiabiliser les différentes opérations de montage et d'assemblage, on a déjà proposé de nombreuses conceptions faisant appel à un module d'équipement rapporté sur l'élément arrière, notamment sur un ouvrant en forme de hayon.

Dans toutes les conceptions connues, par exemple dans le document EP-A1-0.652.142, le module d'équipement, ou un sous-ensemble équivalent comportant notamment une platine support de différents équipements et accessoires, se présente sous la forme d'un sous-ensemble relativement encombrant qui est monté sur l'élément arrière du véhicule depuis l'intérieur de celui-ci en faisant appel à différents moyens de fixation qui rende les opérations de montage et de fixation longues et complexes. Selon ces conceptions connues, il est de plus particulièrement difficile de monter le module d'équipement lorsque l'élément arrière est un élément fixe appartenant à la caisse du véhicule, ou de monter le module d'équipement à l'intérieur du hayon lorsque ce dernier est déjà monté articulé sur la caisse du véhicule.

Afin de remédier à ces inconvénients, l'invention propose un module d'équipement pour une partie transversale arrière, d'un véhicule automobile du type mentionné précédemment (EP-A-0 652 142), caractérisée en ce qu'il comporte en outre des moyens pour monter le module dans un logement complémentaire d'un élément de la partie arrière, le montage dans le logement étant réalisé depuis l'extérieur du véhicule.

Selon des caractéristiques ayant trait à des modes de réalisation de l'invention :
- les moyens de montage comportent un corps externe de profil et de forme complémentaire de ceux du logement qui le reçoit et qui, en position montée, constitue une partie rapportée du panneau extérieur d'habillage ;
- le corps externe du module d'équipement est une pièce moulée en matière plastique ;
- le corps externe du module d'équipement porte des éléments de fixation du module d'équipement comportant des tiges de fixation qui s'étendent parallèlement à la direction de montage du module d'équipement ;
- le module d'équipement comporte une platine interne qui porte notamment le système d'essuyage ;
- la platine interne comporte deux parties, reliées entre elles par des moyens d'amortissement élastique, dont une première partie porte des équipements et dont une seconde partie est reliée au corps externe du modulé d'équipement ;
- la seconde partie de la platine comporte des moyens pour la fixation du module d'équipement sur l'élément ;
- la seconde partie de la platine porte au moins un équipement, notamment un mécanisme de serrure destiné à coopérer avec un ouvrant monté mobile par rapport à l'élément ;
- la seconde partie de la platine est une poutre d'orientation générale transversale et horizontale ;
- la première partie de la platine porte le système d'essuyage ;
- le module d'équipement est agencé en dessous de l'encadrement de vitre ;
- le module d'équipement comporte une vitre arrière ;
- le module d'équipement comporte un cadre fermé par la vitre arrière ;
- la vitre arrière est montée articulée sur le module d'équipement ;
- le module d'équipement comporte au moins un feu arrière, notamment de signalisation de freinage, de changement de direction, de recul, antibrouillard, ou d'éclairage de la plaque d'immatriculation ;
- le module d'équipement comporte au moins un dispositif d'éclairage intérieur de l'habitacle et/ou du coffre;
- le module d'équipement comporte des moyens de positionnement en position de parcage d'un bras d'essuie-glace du système d'essuyage ;
- le module d'équipement comporte des moyens de protection, en position de parcage, d'un bras d'essuie-glace du système d'essuyage ;
- le module d'équipement comporte des moyens formant poignée ;
- les moyens de positionnement et/ou de protection et/ou formant poignée sont réalisés venus de matière par moulage avec le corps externe du module d'équipement ;
- le module d'équipement comporte des moyens de commande, depuis l'intérieur, de l'ouverture de l'élément lorsque ce dernier est un ouvrant du véhicule ;
- il est prévu des moyens de renfort de la fixation du module d'équipement sur l'élément, notamment en vue d'améliorer sa résistance à l'arrachement depuis l'extérieur du véhicule ;
- la direction de montage du module d'équipement est sensiblement perpendiculaire au plan général vertical de l'élément ;
- ledit élément est un ouvrant arrière du véhicule qui est monté articulé sur la caisse du véhicule, notamment autour d'un axe transversal supérieur du véhicule.

L'invention propose ainsi un module d'équipement pour une partie arrière de véhicule automobile réalisée conformément aux enseignements de l' invention.

D'autres caractéristiques et avantages de l'invention apparaîtront à la lecture de la description détaillée qui va suivre pour la compréhension de laquelle on se reportera aux dessins annexés dans lesquels :
- la figure 1 est une vue schématique en perspective, de trois-quarts arrière, qui illustre un premier exemple de réalisation de l'invention et sur laquelle on a représenté en vue extérieure un hayon arrière de véhicule avec son module d'équipement en position de montage ;
- la figure 2 est une vue similaire à celle de la figure 1 sur laquelle on a représenté en vue intérieure le hayon arrière avec son module d'équipement en position de montage ;
- la figure 3 est une vue latérale à plus grande échelle, selon la flèche grand F3 de la figure 1 qui représente le module d'équipement ;
- la figure 4 est une vue schématique du module d'équipement selon la flèche F4 de la figure 2 ;
- les figures 5 et 6 sont des vues en section, par des plans longitudinaux verticaux, selon respectivement les lignes 5-5 et 6-6 de la figure 4, sur lesquelles le module d'équipement est représenté en position montée ;
- les figures 7 et 8 sont des vue similaire à celles des figures 5 et 6 qui représentent des variantes de réalisation des moyens de montage et de fixation du module d'équipement en position montée ;
- la figure 9 est une vue schématique en perspective qui illustre une première variante de réalisation du module d'équipement ; et
- la figure 10 est une vue similaire à celle de la figure 9 qui illustre une deuxième variante de réalisation du module d'équipement comportant une vitre arrière articulée sur le module équipement.

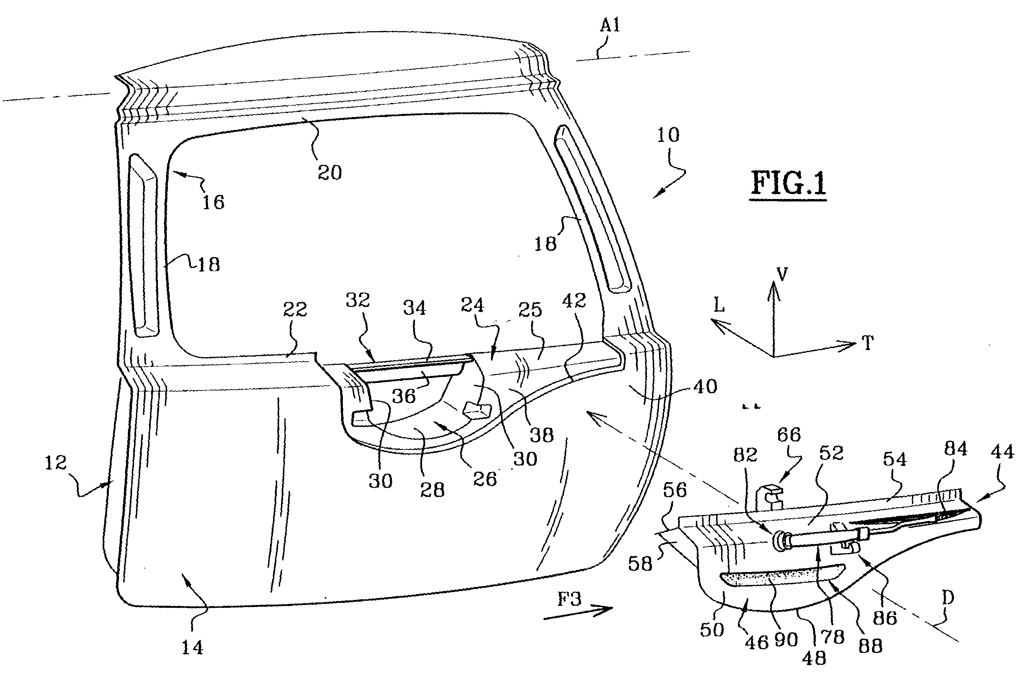

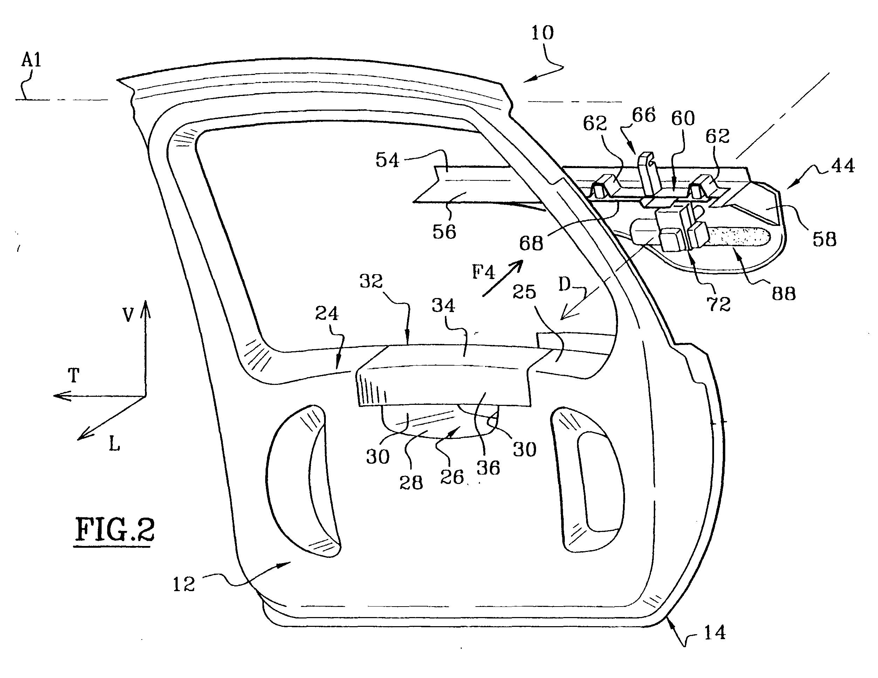

Dans la description qui va suivre, on utilisera, à titre non limitatif, les termes transversal, longitudinal et vertical en référence aux trois axes correspondants "T", "L" et "V" indiqués notamment aux figures 1 et 2.

Dans la description, des éléments identiques, analogues ou similaires seront désignés par les mêmes chiffres de référence.

On a représenté, notamment aux figures 1 et 2, un élément 10 appartenant à la partie transversale arrière d'un véhicule automobile, non représenté dans son ensemble, qui, dans le mode de réalisation représenté aux figures 1 et 2, est un hayon transversal arrière de véhicule automobile.

Selon une conception générale connue, le hayon 10 est conçu pour être monté articulé, par exemple autour d'un axe horizontal transversal supérieur A1, par rapport à une partie complémentaire de la caisse du véhicule.

Selon cette conception générale connue, l'élément arrière 10 formant hayon est constitué par une structure intérieure porteuse 12, en tôle emboutie pliée et soudée, et par un panneau extérieur d'habillage 14 qui est par exemple une peau extérieure de carrosserie fixée sur la structure porteuse 12.

Ainsi réalisé, le hayon 10 comporte une partie inférieure pleine et une partie supérieure ouverte constituant un encadrement 16 destiné à recevoir, de manière connue, une vitre arrière (non représentée) qui peut être une vitre arrière fixe ou une vitre arrière articulée sur le hayon.

A cet effet, l'encadrement 16 est notamment délimité par deux montants latéraux verticaux 18, par un montant supérieur transversal horizontal 20 et par un montant inférieur transversal horizontal 22.

Dans le cas où l'encadrement 16 reçoit une vitre arrière fixe, celle-ci est par exemple fixée par collage sur les portions correspondantes de surfaces extérieures des montants 18, 20 et 22.

Comme on peut le voir aux figures 1 et 2, la structure porteuse intérieure délimite une traverse horizontale caissonnée 24 qui est agencée en haut de la partie inférieure du hayon 10, c'est-à-dire sous le montant inférieur horizontal 22 de l'encadrement 16 et dans laquelle est conformé un logement 26 délimité par un fond incurvé 28 et par deux faces latérales longitudinales d'orientation sensiblement verticale 30, le logement 26 étant débouchant longitudinalement, tant vers l'avant, c'est-à-dire vers l'intérieur de l'habitacle, que vers l'arrière, c'est-à-dire vers l'extérieur du véhicule.

A sa partie supérieure avant, le logement 26 comporte une barre transversale supérieure de renfort 32 qui se présente sous la forme d'une cornière en "L" comportant une aile horizontale 34 et une aile verticale 36.

La partie inférieure de la structure porteuse 12 dans laquelle est agencé le logement 26 est délimitée longitudinalement vers l'arrière par une tôle transversale arrière 38 qui s'étend sensiblement dans un plan vertical et qui est habillée par une partie correspondante 40 de la peau de carrosserie 14 qui comporte une découpe 42 sensiblement complémentaire du profil du logement 26 mais située à distance de celle-ci de façon à dégager une partie de la face extérieure de la tôle 38, ainsi qu'une partie de la tôle transversale supérieure horizontale 25 de la traverse 24.

Dans le cas d'un hayon articulé autour d'un axe horizontal, l'orientation verticale de certains éléments doit bien entendu être comprise comme correspondant à la position fermée du hayon.

En considérant la figure 1, on voit ainsi que le hayon 10 comporte un logement 26 qui est globalement ouvert vers l'arrière, c'est-à-dire vers l'extérieur du hayon 10, et dans lequel peut être mis en place, conformément aux enseignements de l'invention, un module d'équipement 44.

Le profil général et la forme extérieure du module d'équipement 44 sont complémentaires de ceux du logement 26 et de la découpe 42, ainsi que des autres éléments environnants, de manière à permettre le montage du module d'équipement 44 dans le logement 26 du hayon 10, d'arrière en avant, selon la direction de montage D indiquée aux figures 1 et 2.

Conformément aux enseignements de l'invention, le montage du module d'équipement 44 s'effectue ainsi sur le hayon 10 depuis l'extérieur, c'est-à-dire qu'un tel montage est particulièrement aisé et peut s'effectuer sur la partie arrière du véhicule, notamment sur son hayon 10, sans avoir à accéder à l'intérieur de l'habitacle.

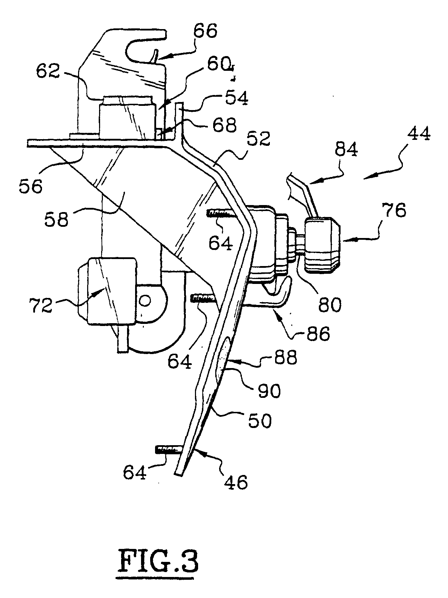

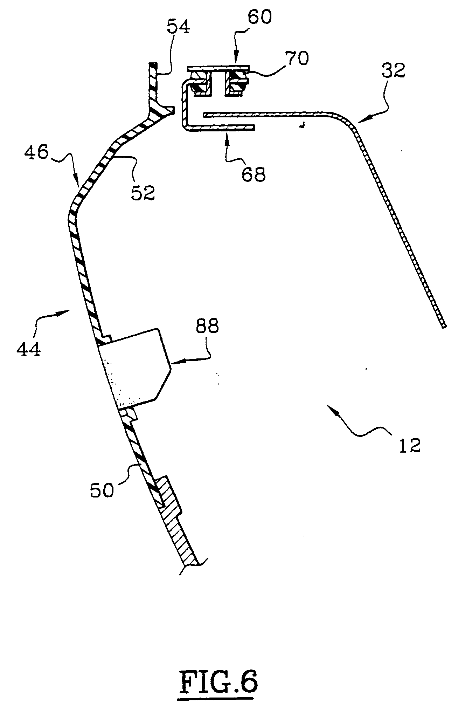

On décrira maintenant plus en détail la conception du module d'équipement 44, notamment en référence aux figures 3 à 6.

Le module d'équipement 44 comporte tout d'abord un corps externe 46 qui est par exemple une pièce moulée en matière plastique de forme complexe.

Le corps 46 est la pièce externe du module 44, en forme générale de plaque et elle est conformée dans les trois dimensions, avec son bord ou contour externe 48 qui est complémentaire de la découpe 42 afin de compléter celle-ci lorsque le module est en position monté, c'est-à-dire que le corps externe 46 constitue une partie complémentaire de la peau de carrosserie 40 de la partie inférieure du hayon 10.

Ainsi, le corps 46 comporte une plaque verticale arrière 50 qui est prévue pour être adjacente à la tôle 38 et une plaque supérieure transversale inclinée vers l'arrière 52 prévue pour être adjacente à la tôle supérieure 25 de la traverse 24, la plaque supérieure 52 se prolongeant verticalement vers le haut par un bord 54 qui complète le montant inférieur 22 de l'encadrement 16 pour recevoir la vitre et/ou un joint d'étanchéité de vitre.

Au-delà du bord 54, le corps externe 46 comporte aussi une plaque 56 qui s'étend vers l'intérieur, c'est-à-dire vers l'avant, en étant légèrement inclinée par rapport à l'horizontale, cette plaque 56 étant reliée aux plaques 50 et 52 par deux joues latérales verticales de renfort 58.

En position montée du module 44 dans son logement 26, la plaque 56 s'étend en dessous de l'aile supérieure 34 de la barre transversale de renfort 32.

La plaque 56 intègre une poutre transversale 60 constituant un élément rigide, par exemple métallique, formant une partie d'une platine support d'éléments ou composants d'équipement, intégrée au module 44.

La poutre transversale 60 est rapportée sur la plaque 56, où est noyée partiellement dans cette dernière lors l'opération de moulage du corps externe 46, et elle comporte deux pattes surélevées 62 pouvant comporter chacune par exemple un trou permettant une fixation complémentaire du module 44 sous l'aile 34 par des moyens, non représentés, par exemple au moyen de liaisons vis-écrous.

Les autres moyens de montage et de fixation en position montée du module d'équipement 44 sur le hayon 10 sont constitués par une série de tiges de fixation 64 qui appartiennent au corps externe 46 et qui s'étendent longitudinalement vers l'avant selon une direction parallèle à la direction de montage D pour être reçues dans des moyens complémentaires de montage, non représentés en détail, portés par la tôle 38 de la structure porteuse intérieure 12.

Les tiges de fixation 64 sont par exemple des tiges filetées qui sont reçues dans des trous complémentaires, non représentés de la structure porteuse dont chacun est muni de moyen d'accrochage et de fixation automatiques, tels que des systèmes à griffes ou tout autre système équivalant, de manière à permettre le montage et la fixation selon la direction D sans avoir à intervenir ultérieurement, c'est-à-dire sans avoir à intervenir depuis l'intérieur du véhicule pour assurer la fixation définitive, cette fixation étant obtenue, selon la direction D, de manière "automatique" lorsque l'on monte en place le module 44 dans le logement 26.

La partie supérieure en forme de poutre rigide 60 de la platine peut porter, sur sa face supérieure, un mécanisme de serrure 66 qui est destiné à coopérer avec des moyens complémentaires d'accrochage portés par le bord inférieur de la vitre arrière lorsque celle-ci est montée articulée sur le hayon, de manière à la retenir en position fermée.

La platine de support du module d'équipement 44 comporte une autre partie inférieure 68 en tôle pliée qui s'étend sensiblement horizontalement en dessous de la partie supérieure 60 à laquelle elle est fixée par l'intermédiaire de blocs amortisseurs 70 qui sont par exemple logés sous les pattes 62.

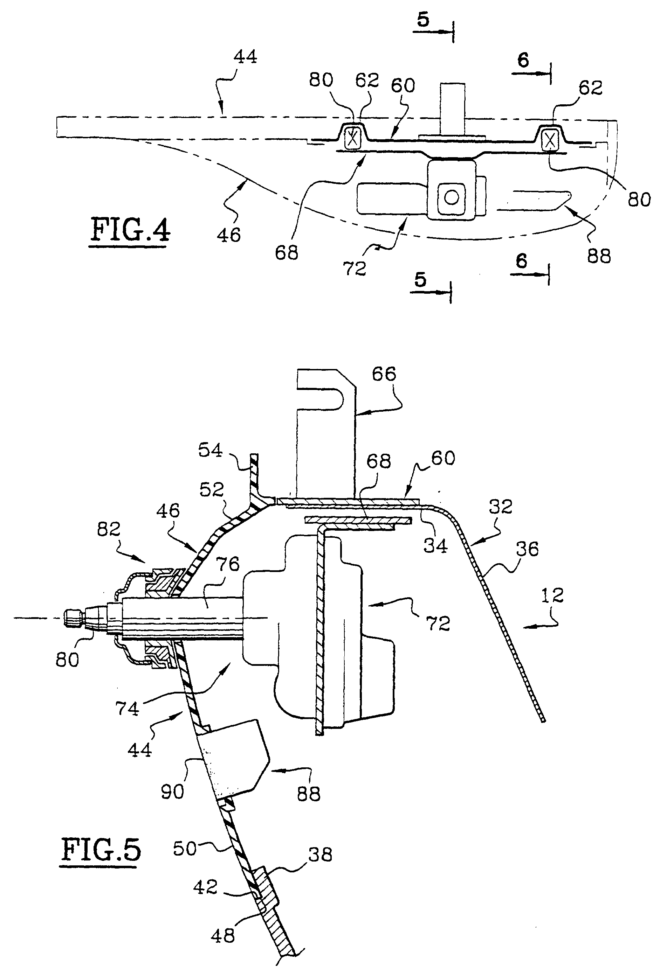

Comme on peut le voir notamment aux figures 2 et 5, la partie inférieure 68 de la platine sert de support au motoréducteur 72 d'un système 74 d'essuyage de la vitre arrière dont l'arbre de sortie 76, c'est-à-dire l'arbre d'entraînement d'un bras d'essuie-glace 78, fait saillie longitudinalement vers l'arrière à travers les parties correspondantes du corps externe 46, au niveau du raccordement entre les plaques 50 et 52 de celui-ci.

L'extrémité libre arrière 80 de l'arbre d'entraînement 16 reçoit, de manière connue, une extrémité du bras d'essuie-glace 78 pour l'entraîner ici en balayage alterné.

Des moyens de guidage en rotation, d'étanchéité et d'habillage 82 sont portés par le module 44, c'est-à-dire par le corps externe 46.

En association avec le bras d'essuie-glace 78 qui porte un balai d'essuie-glace 84, le corps externe moulé en matière plastique 46 porte aussi, sur la face extérieure de sa plaque 50, un élément 86 formant rampe, de conception générale connue, qui permet de positionner le bras d'essuie-glace 78 en position de parcage sans que la raclette d'essuyage portée par le balai 84 ne soit en appui contre une surface du véhicule, c'est à dire ici contre une surface du module d'équipement 44.

La rampe 86 peut être rapportée sur le corps 46, partiellement noyé dans celui-ci, ou bien réalisée venue de matière par moulage avec le corps 46.

Le module d'équipement 44 comporte d'autres composants.

Dans l'exemple illustré aux figures 1 à 6, le module d'équipement 44 comporte un feu de signalisation de freinage 88, aussi appelé "feu stop", qui comporte ici une fenêtre transparente colorée 90 qui est intégrée dans la partie inférieure de la plaque 50 du corps externe 46.

Le feu stop comporte bien entendu également des moyens d'éclairage non représentés en détail.

Le module 44 comporte bien entendu des éléments de circuits électriques, non représentés sur les figures, pour relier entre eux ses différents composants et équipements ainsi que des moyens de connexion ou de raccordement électrique du module au hayon.

Selon un exemple de réalisation, non représenté, ces éléments de circuit(s) électrique(s) peuvent comporter des bandes métalliques conductrices noyées dans le corps moulé en matière plastique isolante 46 du module d'équipement 44.

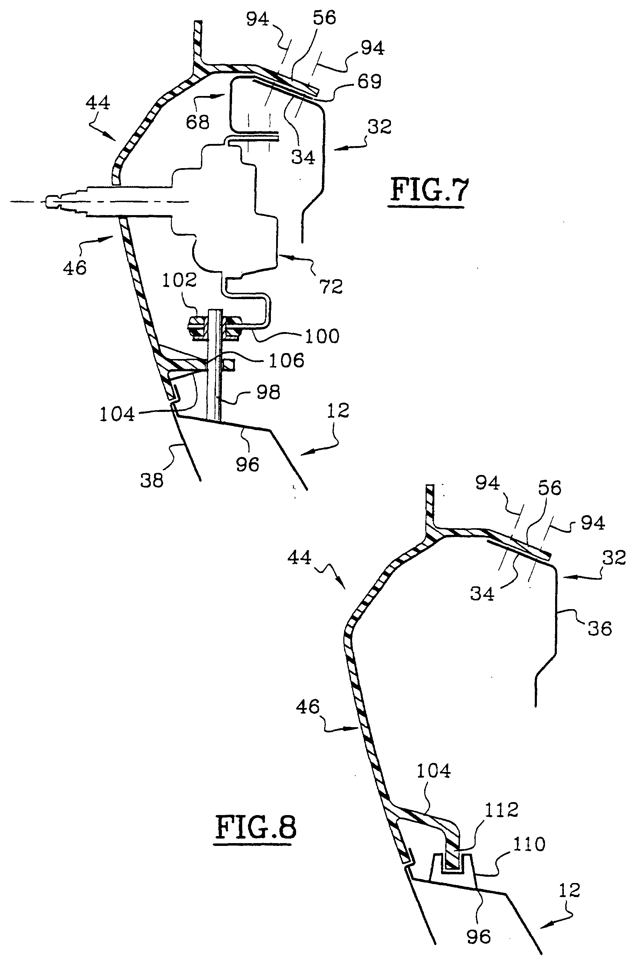

Dans les variantes de réalisation illustrées aux figures 7 et 8, on a représenté des moyens perfectionnés de montage et de fixation du module d'équipement 44 sur le hayon arrière 10 afin notamment d'éviter des tentatives d'effraction par arrachement du module 44 depuis l'extérieur du véhicule.

A cet effet, comme on peut le voir à la partie supérieure des figures 7 et 8, on peut conformer la plaque supérieure 56 pour qu'elle s'étende au-dessus de l'aile supérieure 34 de la cornière transversale de renfort 32 pour lier ensemble ces deux éléments, avec éventuellement interposition d'une aile correspondante 69 de la partie 68 de la platine (voir figure 7), par des moyens de liaison et de fixation, par exemple du type vis-écrou, qui ne sont pas représentés en détail mais dont les axes de fixation 94 sont représentés schématiquement sur les figures.

Pour accroître encore la résistance à l'arrachement, il est possible de conformer la structure porteuse intérieure 12 avec une aile horizontale inférieure 96 qui porte par exemple, comme on peut le voir à la figure 7, un doigt vertical de fixation qui s'étend à travers une aile horizontale 100 du motoréducteur 72, avec interposition d'un amortisseur 102.

Le doigt 98 s'étend aussi à travers un trou 106 formé dans une aile interne horizontale 104 du corps externe moulé en matière plastique 46 du module d'équipement 44.

Le montage depuis l'extérieur du module 44 s'effectue toujours globalement selon la direction D mentionnée précédemment et, en fin de mise en place, il y a une course verticale de montage, de haut en bas permettant l'introduction du doigt 98 dans l'amortisseur 102 et le trou 106.

Les moyens d'accrochage anti-arrachement du module peuvent aussi être constitués comme on le voit à la figure 8, en variante ou en complément du doigt 98, par une gouttière 110 porté par l'aile 96 dans laquelle est reçue la tranche inférieure d'une aile verticale 112 qui prolonge verticalement vers le bas l'aile interne horizontale 104, le montage étant analogue à celui évoqué précédemment.

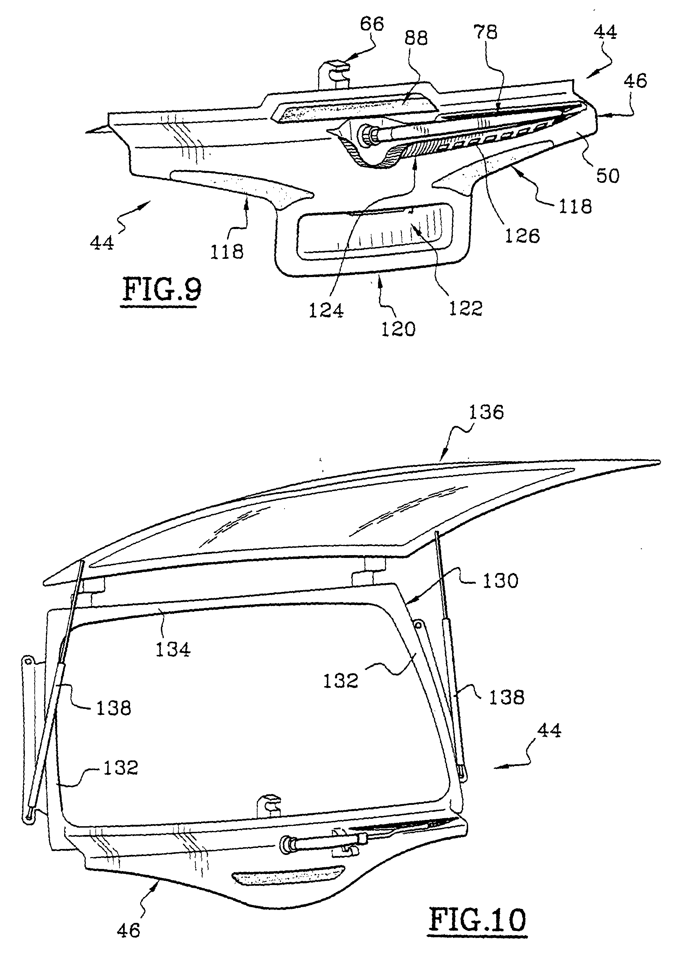

Dans la variante de réalisation représentée à la figure 9, le module d'essuyage 44 comporte deux feux clignotants agencés de part et d'autre d'une partie inférieure 120 de la plaque 50 qui délimite un logement 122 pour une plaque d'immatriculation.

Le feu stop 88 est en partie supérieure du module 44 tandis que les deux feux latéraux inférieurs 118 sont par exemple des rappels de feux clignotants ou les feux clignotants eux-mêmes.

Réalisée venue de matière par moulage avec le corps 46, on a aussi représenté à la figure 9 une partie profilée 124 s'étendant longitudinalement vers l'arrière qui constitue une gouttière de protection du bras d'essuie-glace 78, notamment afin que celui-ci résiste à l'arrachement lors du lavage dans les machines automatiques, la gouttière 124 comportant des ouïes 126 d'évacuation de l'eau.

Cette gouttière 124 peut aussi être conformée pour constituer une poignée de manoeuvre du hayon.

Enfin, dans la variante représentée à la figure 10, le module 44 intègre à sa partie supérieure un cadre 130, qui est par exemple réalisé venu de matière par moulage avec le corps externe intérieur 46 qui est constitué par deux montants verticaux 132 et par un montant supérieur horizontal 134 sur lequel une vitre 136 est montée articulée au moyen de dispositifs d'équilibrage 138.

Selon cette conception, il est ainsi possible de réaliser l'ensemble du module 44 et d'assembler la vitre articulée 136 en dehors du hayon puis de venir monter cet ensemble de module d'équipement 44 sur le hayon 10, toujours depuis l'extérieur.

## Revendications

1. Module d'équipement (44) pour une partie arrière (10) de véhicule automobile, comportant un système d'essuyage (78) d'une vitre arrière et un feu d'éclairage (88), **caractérisé en ce qu'**il comporte en outre des moyens pour monter le module dans un logement complémentaire (26) d'un élément (10) de la partie arrière, le montage dans le logement (26) étant réalisé depuis l'extérieur du vehicule.

2. Module d'équipement (44) selon la revendication précédente, **caractérisé en ce que** les moyens de montage comportent un corps externe (46) de profil et de forme complémentaire de ceux du logement (26) qui le reçoit et qui, en position montée, constitue une partie rapportée d'un panneau extérieur d'habillage (14).

3. Module d'équipement (44) selon la revendication précédente, **caractérisé en ce que** le corps externe (46) du module d'équipement est une pièce moulée en matière plastique.

4. Module d'équipement (44) selon l'une des revendications 2 ou 3, **caractérisé en ce que** le corps externe (46) du module d'équipement porte des éléments de fixation (64) du module d'équipement (44) comportant des tiges de fixation qui s'étendent parallèlement à la direction (D) de montage du module d'équipement.

5. Module d'équipement (44) selon l'une quelconque des revendications 2 à 4, **caractérisé en ce qu'**il comporte une platine interne (60,68) qui porte notamment le système d'essuyage (72, 78).

6. Module d'équipement (44) selon la revendication précédente, **caractérisé en ce que** la platine interne comporte deux parties (60, 68), reliées entre elles par des moyens d'amortissement élastique (70), dont une première partie (68) porte des équipements et dont une seconde partie (60) est reliée au corps externe (46) du module d'équipement (44).

7. Module d'équipement (44) selon la revendication précédente, **caractérisé en ce que** la seconde partie (60) de la platine comporte des moyens pour la fixation du module d'équipement (44) sur l'élément (70).

8. Module d'équipement (44) selon la revendication 6, **caractérisé en ce que** la seconde partie (60) de la platine porte au moins un équipement, notamment un mécanisme de serrure (66) destiné à coopérer avec un ouvrant monté mobile par rapport à l'élément.

9. Module d'équipement (44) selon l'une quelconque des revendications 6 à 8, **caractérisé en ce que** la seconde partie (60) de la platine est une poutre d'orientation générale transversale et horizontale.

10. Module d'équipement (44) selon l'une quelconque des revendications 6 à 9, **caractérisé en ce que** la première partie (68) de la platine porte le système d'essuyage (72, 78).

11. Module d'équipement (44) selon l'une quelconque des revendications précédentes, **caractérisé en ce qu'**il comporte une vitre arrière (136).

12. Module d'équipement (44) selon la revendication précédente, **caractérisé en ce qu'**il comporte un cadre (132, 134) fermé par la vitre arrière (136).

13. Module d'équipement (44) selon la revendication précédente, **caractérisé en ce que** la vitre arrière (136) est montée articulée sur le module d'équipement (44).

14. Module d'équipement (44) selon l'une quelconque des revendications précédentes, **caractérisé en ce qu'**il comporte au moins un feu arrière (88) notamment de signalisation de freinage, de changement de direction, de recul, antibrouillard, ou d'éclairage de la plaque d'immatriculation.

15. Module d'équipement (44) selon l'une quelconque des revendications précédentes, **caractérisé en ce qu'**il comporte au moins dispositif d'éclairage intérieur de l'habitacle et/ou du coffre.

16. Module d'équipement (44) selon l'une quelconque des revendications précédentes, **caractérisé en ce qu'**il comporte des moyens (86) de positionnement en position de parcage d'un bras d'essuie-glace (78) du système d'essuyage.

17. Module d'équipement (44) selon l'une quelconque des revendications précédentes, **caractérisé en ce qu'**il comporte des moyens de protection (124), en position de parcage, d'un bras d'essuie-glace (78) du système d'essuyage.

18. Module d'équipement (44) selon l'une quelconque des revendications précédentes, **caractérisé en ce qu'**il comporte des moyens formant poignée.

19. Module d'équipement (44) selon l'une quelconque des revendications 16 à 18 prise en combinaison avec la revendication 3, **caractérisé en ce que** lesdits moyens de positionnement (86) et/ou de protection (124) et/ou formant poignée sont réalisés venus de matière par moulage avec le corps externe (46) du module d'équipement (44).

20. Module d'équipement (44) selon l'une quelconque des revendications précédentes, **caractérisé en ce qu'**il comporte des moyens de commande, depuis l'intérieur, de l'ouverture de l'élément lorsque ce dernier est un ouvrant du véhicule.

21. Module d'équipement (44) selon l'une quelconque des revendications précédentes, **caractérisé en ce que** la direction (D) de montage du module d'équipement (44) est sensiblement perpendiculaire au plan général vertical de l'élément (10).

22. Partie transversale arrière d'un véhicule automobile comportant un module selon l'une quelconque des revendications précédentes.

23. Partie transversale arrière d'un véhicule automobile selon la revendication précédente, **caractérisée en ce que** le module d'équipement (44) est agencé en dessous d'un encadrement (14) de vitre.

24. Partie transversale arrière d'un véhicule automobile selon la revendication 22 ou 23, **caractérisée en ce qu'**il est prévu des moyens (88, 106, 110, 112) de renfort de la fixation de module d'équipement sur l'élément, notamment en vue d'améliorer sa résistance à l'arrachement depuis l'extérieur du véhicule.

25. Partie transversale arrière d'un véhicule selon l'une des revendications 22 à 24, **caractérisée en ce que** ledit élément (10) est un ouvrant arrière du véhicule qui est monté articulé sur la caisse du véhicule, notamment autour d'un axe transversal supérieur (A1) du véhicule.

## Patentansprüche

1. Ausrüstungsmodul (44) für einen hinteren Teil (10) eines Kraftfahrzeugs, beinhaltend ein Wischsystem (78) für eine Heckscheibe und eine Beleuchtung (88), **dadurch gekennzeichnet, dass** es außerdem Mittel umfasst, um das Modul in eine entsprechende Aufnahme (26) eines Elementes (10) des hinteren Fahrzeugteils zu montieren, wobei die Montage in die Aufnahme (26) von außerhalb des Fahrzeugs durchgeführt wird.

2. Ausrüstungsmodul (44), gemäß vorhergehendem Anspruch, **dadurch gekennzeichnet, dass** die Montagemittel einen externen Körper (46) mit einem Profil und einer Form aufweisen, die dem Profil und der Form der der ihn empfangenden Aufnahme (26) entsprechen, wobei die Aufnahme in der montierten Position einen eingesetzten Teil einer äußeren Aufbauverkleidung (14) bildet.

3. Ausrüstungsmodul (44), gemäß vorhergehendem Anspruch, **dadurch gekennzeichnet, dass** der externe Körper(46) des Ausrüstungsmoduls ein Gussteil aus Kunststoff ist.

4. Ausrüstungsmodul (44), gemäß einem der Ansprüche 2 oder 3, **dadurch gekennzeichnet, dass** der externe Körper (46) des Ausrüstungsmoduls Befestigungselemente (64) des Ausrüstungsmoduls (44) trägt, wobei diese Befestigungselemente Befestigungsstifte aufweisen, die sich parallel zur Montagerichtung D des Ausrüstungsmoduls erstrecken.

5. Ausrüstungsmodul (44), gemäß irgendeinem der Ansprüche 2 bis 4, **dadurch gekennzeichnet, dass** es eine interne Halteplatte (60, 68) aufweist, die unter anderem das Wischsystem (72, 78) trägt.

6. Ausrüstungsmodul (44), gemäß vorhergehendem Anspruch, **dadurch gekennzeichnet, dass** die interne Halteplatte zwei Teile (60, 68) aufweist, die miteinander über elastische Dämpfungsmittel (70) verbunden sind, wobei ein erster Teil (68) Ausrüstungsteile trägt und ein zweiter Teil (60) mit dem externen Körper (46) des Ausrüstungsmoduls (44) verbunden ist.

7. Ausrüstungsmodul (44), gemäß vorhergehendem Anspruch, **dadurch gekennzeichnet, dass** der zweite Teil (60) der Halteplatte Mittel für die Befestigung des Ausrüstungsmoduls (44) auf dem Element (70) umfasst.

8. Ausrüstungsmodul (44), gemäß Anspruch 6, **dadurch gekennzeichnet, dass** der zweite Teil (60) der Halteplatte mindestens ein Ausrüstungsteil trägt, unter anderem einen Schließmechanismus (66), welcher dazu bestimmt ist, mit einem im Vergleich zum Element beweglich montierten Öffnungsteil zusammenzuarbeiten.

9. Ausrüstungsmodul (44), gemäß irgendeinem der Ansprüche 6 bis 8, **dadurch gekennzeichnet, dass** der zweite Teil (60) der Halteplatte ein Träger für die allgemeine Schwenkung in Querrichtung und in horizontaler Richtung ist.

10. Ausrüstungsmodul (44), gemäß irgendeinem der Ansprüche 6 bis 9, **dadurch gekennzeichnet, dass** der erste Teil (68) der Halteplatte das Wischsystem trägt (72, 78).

11. Ausrüstungsmodul (44), gemäß irgendeinem der vorhergehenden Ansprüche, **dadurch gekennzeichnet, dass** es eine Heckscheibe (136) aufweist.

12. Ausrüstungsmodul (44), gemäß vorhergehendem Anspruch, **dadurch gekennzeichnet, dass** es einen Rahmen (132, 134) umfasst, der durch die Heckscheibe (136) verschlossen ist.

13. Ausrüstungsmodul (44), gemäß vorhergehendem Anspruch, **dadurch gekennzeichnet, dass** die Heckscheibe (136) gelenkig auf das Ausrüstungsmodul (44) montiert ist.

14. Ausrüstungsmodul (44), gemäß irgendeinem der vorhergehenden Ansprüche, **dadurch gekennzeichnet, dass** es mindestens ein Schlusslicht (88) aufweist (z.B. Bremsleuchte, Blinker, Rückwärtsfahrt, Nebelschlussleuchte oder Nummernschildbeleuchtung).

15. Ausrüstungsmodul (44), gemäß irgendeinem der vorhergehenden Ansprüche, **dadurch gekennzeichnet, dass** es mindestens eine Beleuchtungsvorrichtung für den Fahrzeuginnenraum bzw. für den Kofferraum aufweist.

16. Ausrüstungsmodul (44), gemäß irgendeinem der vorhergehenden Ansprüche, **dadurch gekennzeichnet, dass** es Positionierungsmittel (86) für die Parkposition eines Wischhebels (78) des Wischsystems aufweist.

17. Ausrüstungsmodul (44), gemäß irgendeinem der vorhergehenden Ansprüche, **dadurch gekennzeichnet, dass** es Schutzmittel (124) für die Parkposition eines Wischhebels (78) des Wischsystems aufweist.

18. Ausrüstungsmodul (44), gemäß irgendeinem der vorhergehenden Ansprüche, **dadurch gekennzeichnet, dass** es griffbildende Mittel aufweist.

19. Ausrüstungsmodul (44), gemäß irgendeinem der Ansprüche 16 bis 18 in Kombination mit dem Anspruch 3, **dadurch gekennzeichnet, dass** die besagten Positionierungsmittel (86) bzw. die Schutzmittel (124) bzw. die griffbildenden Mittel aus einem Stück durch Guss mit dem externen Körper (46) des Ausrüstungsmoduls (44) ausgeführt sind.

20. Ausrüstungsmodul (44), gemäß irgendeinem der vorhergehenden Ansprüche, **dadurch gekennzeichnet, dass** es Mittel für die Steuerung von innen der Öffnung des Elementes aufweist, falls letzteres ein öffnendes Teil des Fahrzeugs ist.

21. Ausrüstungsmodul (44), gemäß irgendeinem der vorhergehenden Ansprüche, **dadurch gekennzeichnet, dass** die Montagerichtung (D) des Ausrüstungsmoduls (44) weitgehend senkrecht zur Hauptlotebene des Elementes (10) ist.

22. Hinterer Querteil eines Kraftfahrzeugs, welcher ein Modul gemäß irgendeinem der vorhergehenden Ansprüche aufweist.

23. Hinterer Querteil eines Kraftfahrzeugs, gemäß vorhergehendem Anspruch, **dadurch gekennzeichnet, dass** das Ausrüstungsmodul (44) unter einem Fensterrahmen (14) angeordnet ist.

24. Hinterer Querteil eines Kraftfahrzeugs, gemäß Anspruch 22 oder 23, **dadurch gekennzeichnet, dass** Mittel (88, 106, 110, 112) für die Versteifung der Befestigung des Ausrüstungsmoduls auf das Element vorgesehen sind, unter anderem für die Verbesserung der Widerstandsfähigkeit des Moduls gegen ein Herausreißen von außen.

25. Hinterer Querteil eines Kraftfahrzeugs, gemäß einem der Ansprüche 22 bis 24, **dadurch gekennzeichnet, dass** besagtes Element (10) ein sich hinten öffnendes Teil des Fahrzeugs ist, welches gelenkig auf den Wagenkasten montiert ist, unter anderem in einer um eine obere Querachse (A1) des Fahrzeugs schwenkbaren Weise.

## Claims

1. Equipment module (44) for a rear part (10) of an automobile vehicle, comprising a wiper system (78) for a rear window and an illumination light (88), **characterized in that** it further comprises means for mounting the module in a complementary housing (26) of an element (10) of the rear part, mounting in the housing (26) being performed from outside the vehicle.

2. Equipment module (44) according to the preceding claim, **characterized in that** the mounting means comprise an external body (46) with a profile and shape complementary to the housing (26) into which it fits and which forms an add-on part of an exterior trim panel (14).

3. Equipment module (44) according to the preceding claim, **characterized in that** said external body (46) of the equipment module is a molded plastic part.

4. Equipment module (44) according to one of the claims 2 or 3, **characterized in that** said external body (46) of the equipment module carries fixation elements (64) of the equipment module (44) comprising fixation pins extending parallel in the assembly direction (D) of the equipment module.

5. Equipment module (44) according to any one of claims 2 to 4, **characterized in that** it comprises an internal plate (60, 68) that in particular carries the said wiper system (72, 78).

6. Equipment module (44) according to the preceding claim, **characterized in that** said internal plate comprises two parts (60, 68) connected together by elastic damping means (70), of which a first part (68) carries equipment items and a second part (60) is connected to the external body (46) of the equipment module (44).

7. Equipment module (44) according to the preceding claim, **characterized in that** said second part (60) of the plate comprises means for mounting the equipment module (44) to the element (70).

8. Equipment module (44) according to claim 6, **characterized in that** the second part (60) of the plate carries at least one equipment item, in particular a lock mechanism (66) intended to cooperate with a door free to move relative to the element.

9. Equipment module (44) according to any one of claims 6 to 8, **characterized in that** the second part (60) of the plate is a beam having a transverse and horizontal general orientation.

10. Equipment module (44) according to any one of claims 6 to 9, **characterized in that** the first part (68) of the plate carries the wiper system (72, 78).

11. Equipment module (44) according to any one of the preceding claims, **characterized in that** it comprises a rear window (136).

12. Equipment module (44) according to the preceding claim, **characterized in that** it comprises a frame (132, 134) closed by the rear window (136).

13. Equipment module (44) according to the preceding claim, **characterized in that** said rear window (136) is mounted articulatingly on the equipment module (44).

14. Equipment module (44) according to any one of the preceding claims, **characterized in that** it comprises at least one rear light (88), particularly a brake light, direction indicator, reversing light, fog light or license plate light.

15. Equipment module (44) according to any one of the preceding claims, **characterized in that** it comprises at least one device for illuminating the interior of the passenger compartment and/or the trunk.

16. Equipment module (44) according to any one of the preceding claims, **characterized in that** it comprises means (86) for positioning a wiper arm (78) of the wiper system in a park position.

17. Equipment module (44) according to any one of the preceding claims, **characterized in that** it comprises means (124) for protection of a wiper arm (78) of the wiper system, in the park position.

18. Equipment module (44) according to any one of the preceding claims, **characterized in that** it comprises means forming a handle.

19. Equipment module (44) according to any one of claims 16 to 18 taken in combination with claim 3, **characterized in that** said positioning means (86) and/or protection means (124) and/or means forming a handle are molded in one piece with the external body (46) of the equipment module (44).

20. Equipment module (44) according to any one of the preceding claims, **characterized in that** it comprises means for controlling the opening of the element from the inside when this element is a door of the vehicle.

21. Equipment module (44) according to any one of the preceding claims, **characterized in that** the mounting direction (D) of the equipment module (44) is substantially perpendicular to the general vertical plane of the element (10).

22. Transverse rear section of an automobile vehicle comprising a module according to any one of the preceding claims.

23. Transverse rear section of an automobile vehicle according to the preceding claim, **characterized in that** the equipment module (44) is arranged below a window frame (14).

24. Transverse rear section of an automobile vehicle according to claim 22 or 23, **characterized in that** it comprises means (88, 106, 110, 112) for reinforcing the fixation of the equipment module on the element, particularly in order to increase its resistance to being torn off from the outside of the vehicle.

25. Transverse rear section of a vehicle according to any one of claims 22 to 24, **characterized in that** said element (10) is a rear door of the vehicle mounted articulatingly on the vehicle body, particularly around an upper transverse spindle (A1) of the vehicle.
